# EUROPEAN PATENT APPLICATION

(11) **EP 4 636 405 A1**
(43) Date of publication of application: **22.10.2025**
(21) Application number: 23903106.5
(22) Date of filing: 19.10.2023
(51) Int. Cl.: G01N 35/00

(54) **AUTOMATIC ANALYSIS METHOD AND INSULATED COOLING STORAGE**

(30) Priority: 13.12.2022 JP 2022198391
(71) Applicant: HITACHI HIGH-TECH CORPORATION, Tokyo 105-6409 (JP)
(72) Inventor: SASAKI, Hiroshi, Tokyo 100-8280 (JP); KAJIHARA, Yuri, Tokyo 100-8280 (JP); NOBUKI, Shunichirou, Tokyo 100-8280 (JP); MIYAZAKI, Katsumi, Tokyo 105-6409 (JP); SAKASHITA, Yukinori, Tokyo 105-6409 (JP)
(74) Representative: Mewburn Ellis LLP
(86) International application number: PCT/JP2023/037889
(87) International publication number: WO 2024/127807

(57) **Abstract**

An object of the present invention is to provide an automatic analyzer in which dew condensation water generated on an inner surface of the insulated cooling storage is discharged or volatilized to suppress generation of mold. Therefore, according to the present invention, an automatic analyzer including an insulated cooling storage that insulated-cools a container containing a reagent or a specimen, the automatic analyzer includes a dry air introduction mechanism that introduces air having an absolute humidity lower than an absolute humidity of air in the insulated cooling storage into an inner surface of the insulated cooling storage, in which a hydrophilic film having a contact angle with water of 15° or less is formed on the inner surface of the insulated cooling storage. Since the predetermined hydrophilic film is formed on the inner surface of the insulated cooling storage, the generated dew condensation water does not form water droplets and easily flows toward a drainage path. In addition, a thin water film remaining on the hydrophilic film is also quickly volatilized by a dry air introduced into the insulated cooling storage.

## Description

### Technical Field

The present invention relates to an automatic analyzer that mainly analyzes biological components, such as an immune analyzer and a biochemical analyzer, and an insulated cooling storage provided in the automatic analyzer or the like.

### Background Art

An automatic analyzer includes a reagent insulated cooling storage that stores a reagent to be mixed with a sample (specimen), and the inside of the reagent insulated cooling storage is usually kept at a low temperature of about 5 to 10°C in order to suppress denaturation such as decomposition of the reagent. In addition, a lid that covers the upper portion of the insulated cooling storage is provided with a reagent aspiration hole so that a reagent pipetting nozzle can be inserted when a reagent is aspirated from a reagent container in the insulated cooling storage. In a case where the outside air enters into the insulated cooling storage from the reagent aspiration hole, the outside air is cooled in the reagent insulated cooling storage, and moisture in the outside air is condensed to cause dew condensation.

For example, when the temperature of the outside air is 25°C and the relative humidity is 50%RH, the saturated water vapor amount at 25°C is 23 g/m³, and thus the absolute humidity of the outside air is 11.5 g/m³. On the other hand, in a case where the temperature in the insulated cooling storage is 5°C, the saturated water vapor amount is 6.8 g/m³. Thus, since the absolute humidity of the outside air exceeds the saturated water vapor amount at 5°C, out of the outside air that enters into the insulated cooling storage, water that cannot be dissolved in the air becomes apparent as dew condensation water on the inner surface of the insulated cooling storage.

Therefore, a technique for suppressing generation of dew condensation water in an insulated cooling storage has been conventionally proposed.

For example, PTL 1 discloses an automatic analyzer that reduces or prevents inflow of outside air from a hole for reagent aspiration by setting the inside of an insulated cooling storage to atmospheric pressure or higher by cooling air (paragraph 0074).

### Citation List

### Patent Literature

PTL 1: JP 2013-185980 A

### Summary of Invention

### Technical Problem

Even in the technique of PTL 1, when a part of the lid is opened for replacement of the reagent container, generation of dew condensation water due to outside air flowing into the insulated cooling storage cannot be avoided. In addition, the generated dew condensation water is likely to form water droplets on the inner surface of the insulated cooling storage, and the water droplets are difficult to move from the inner surface unless a plurality of the water droplets are combined to have a size of about 5 mm. Therefore, there is a possibility that the water droplets do not flow toward a drainage path and remain, and mold is generated when the water droplets are left. Therefore, there is a limit to reducing the frequency of maintenance.

An object of the present invention is to provide an insulated cooling storage in which dew condensation water generated on an inner surface of the insulated cooling storage is discharged or volatilized to suppress generation of mold, and an automatic analyzer including the insulated cooling storage.

### Solution to Problem

In order to solve the above problems, the present invention provides an automatic analyzer including an insulated cooling storage that insulated-cools a container containing a reagent or a specimen. The automatic analyzer includes a dry air introduction mechanism that introduces air having an absolute humidity lower than an absolute humidity of air in the insulated cooling storage into an inner surface of the insulated cooling storage, and a hydrophilic film having a contact angle with water of 15° or less is formed on the inner surface of the insulated cooling storage.

### Advantageous Effects of Invention

According to the present invention, since the predetermined hydrophilic film is formed on the inner surface of the insulated cooling storage, the generated dew condensation water does not form water droplets and easily flows toward the drainage path. In addition, a thin water film remaining on the hydrophilic film is also quickly volatilized by a dry air introduced into the insulated cooling storage. As a result, it is possible to provide an insulated cooling storage in which generation of mold is suppressed and an automatic analyzer including the insulated cooling storage.

### Brief Description of Drawings

[FIG. 1] FIG. 1 is an overall configuration diagram of an automatic analyzer according to the present embodiment.
[FIG. 2] FIG. 2 is a top view of a reagent insulated cooling storage as viewed from above (lid is omitted).
[FIG. 3] FIG. 3 is a cross-sectional view of the reagent insulated cooling storage as viewed from the side.
[FIG. 4] FIG. 4 is a cross-sectional view of a chamber as viewed from the side.
[FIG. 5] FIG. 5 is a cross-sectional view of a dry air introduction mechanism as viewed from the side.
[FIG. 6] FIG. 6 is a cross-sectional view of a hydrophilic film observed with a scanning electron microscope.
[FIG. 7] FIG. 7 is a graph showing a relationship between a proportion of silicon dioxide particles in the hydrophilic film (solid content of a coating liquid) and a contact angle with water.
[FIG. 8] FIG. 8 is a graph showing a relationship between the proportion of silicon dioxide in the hydrophilic film (solid content of the coating liquid) and pencil hardness.
[FIG. 9A] FIG. 9A is a view showing a spray direction in a case where the coating liquid is applied to a bottom surface of the chamber.
[FIG. 9B] FIG. 9B is a view showing a spray direction in a case where the coating liquid is applied to an outer peripheral side surface of the chamber.
[FIG. 9C] FIG. 9C is a view showing a spray direction in a case where the coating liquid is applied to an inner peripheral side surface of the chamber.
[FIG. 10] FIG. 10 is a graph showing a relationship between a thickness of the hydrophilic film and the contact angle with water.

### Description of Embodiments

Hereinafter, modes for carrying out the present invention (referred to as "embodiments" below) will be described in detail with reference to the drawings as appropriate.

### (Overall Configuration of Automatic Analyzer)

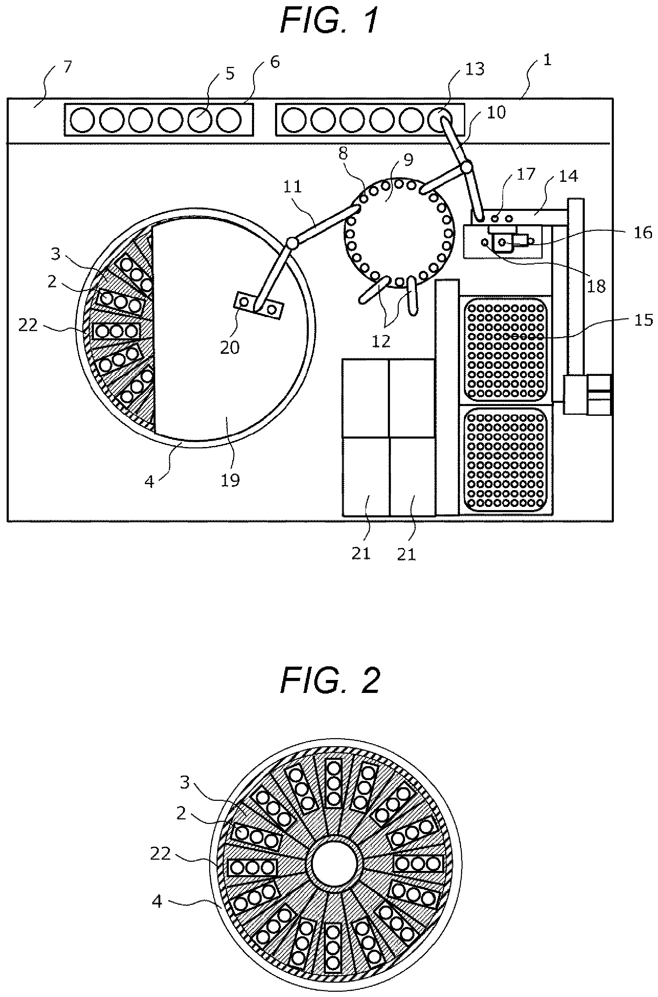

FIG. 1 is an overall configuration diagram of an automatic analyzer according to the present embodiment. An automatic analyzer 1 causes a sample of a specimen to react with a reagent, and analyzes a specific component in the specimen, and mainly includes a rack conveyance line 7, an incubator disk 9, a sample pipetting tip/reaction container conveyance mechanism 14, a sample pipetting nozzle 10 (specimen pipetting mechanism), a reagent insulated cooling storage 4, a reagent pipetting nozzle 11 (reagent pipetting mechanism), a reaction container agitation mechanism 16, a reaction container conveyance mechanism 12, and a detection unit 21.

The rack conveyance line 7 conveys a rack 6 on which a sample container 5 containing a sample is installed, and can move the sample container 5 to a sample pipetting position 13 near the sample pipetting nozzle 10.

The incubator disk 9 is formed in a disc shape, and a plurality of reaction containers 8 can be installed in the circumferential direction. The incubator disk 9 can move a predetermined reaction container 8 to a predetermined position by rotation. The sample pipetting tip/reaction container conveyance mechanism 14 that conveys a sample pipetting tip and the reaction container 8 is installed near the incubator disk 9.

The sample pipetting tip/reaction container conveyance mechanism 14 can move in three directions of an X axis, a Y axis, and a Z axis, and can convey the sample pipetting tip and the reaction container 8 to respective positions of a sample pipetting tip/reaction container holding portion 15, the reaction container agitation mechanism 16, a sample pipetting tip/reaction container disposal port 17, a sample pipetting tip attachment position 18, and a predetermined position of the incubator disk 9. Here, a plurality of unused reaction containers 8 and a plurality of sample pipetting tips are installed in the sample pipetting tip/reaction container holding portion 15. The sample pipetting tip/reaction container conveyance mechanism 14 moves above the sample pipetting tip/reaction container holding portion 15, and then descends, and ascends when gripping an unused reaction container 8. Thereafter, the sample pipetting tip/reaction container conveyance mechanism 14 moves above a predetermined position of the incubator disk 9, and then descends to attach the unused reaction container 8 to the incubator disk 9. In addition, the sample pipetting tip/reaction container conveyance mechanism 14 moves above the sample pipetting tip/reaction container holding portion 15, and then descends and ascends when gripping an unused sample pipetting tip. Thereafter, the sample pipetting tip/reaction container conveyance mechanism 14 moves above the sample pipetting tip attachment position 18 and then descends to install the sample pipetting tip at the sample pipetting tip attachment position 18.

The sample pipetting nozzle 10 can rotate and move up and down. The sample pipetting nozzle 10 moves rotationally above the sample pipetting tip attachment position 18 and then descends to attach the sample pipetting tip to the tip of the sample pipetting nozzle 10. Thereafter, the sample pipetting nozzle 10 to which the sample pipetting tip is attached moves above the sample container 5 held by the rack 6 and then descends to aspirate a predetermined amount of the sample in the sample container 5. Then, the sample pipetting nozzle 10 that has aspirated the sample moves above the incubator disk 9 and then descends to discharge the sample to the unused reaction container 8 held in the incubator disk 9. When the discharge of the sample is completed, the sample pipetting nozzle 10 discards the used sample pipetting tip from the sample pipetting tip/reaction container disposal port 17.

The reagent insulated cooling storage 4 is provided for cooling and storing a reagent container 2 containing a reagent, and includes a reagent container loading portion 3 in which a plurality of reagent containers 2 are loaded, a chamber 22 enclosing the reagent container loading portion 3, a lid 19 that covers an upper opening of the chamber 22 to improve sealability, and the like. Further, the lid 19 is provided with a loader mechanism (not shown) in addition to a reagent aspiration hole 20 through which the reagent pipetting nozzle 11 passes. The loader mechanism moves the reagent container loading portion 3 up and down to carry the reagent container 2 into the reagent insulated cooling storage 4 or carry the reagent container 2 out of the reagent insulated cooling storage 4. Note that details of the reagent insulated cooling storage 4 will be described later.

The reagent pipetting nozzle 11 can rotate and move up and down, and moves rotationally above the reagent aspiration hole 20 provided in the lid 19 of the reagent insulated cooling storage 4, and then descends and passes through the reagent aspiration hole 20. Further, the reagent pipetting nozzle 11 puts the tip thereof into a reagent in a predetermined reagent container 2 and aspirates a predetermined amount of reagent. Thereafter, when the reagent pipetting nozzle 11 moves upward and then rotates to move above a predetermined position of the incubator disk 9, the reagent pipetting nozzle discharges the reagent into the reaction container 8 installed in the incubator disk 9. The reaction container 8 from which the sample and the reagent have been discharged is moved to a predetermined position by rotation of the incubator disk 9, and then is conveyed to the reaction container agitation mechanism 16 by the sample pipetting tip/reaction container conveyance mechanism 14.

The reaction container agitation mechanism 16 applies a rotational motion to the reaction container 8 to agitate and mix the sample and the reagent in the reaction container 8. The reaction container 8 that has been agitated is returned to a predetermined position of the incubator disk 9 by the sample pipetting tip/reaction container conveyance mechanism 14.

The reaction container conveyance mechanism 12 can rotate and move up and down. The reaction container conveyance mechanism 12 moves above the reaction container 8 in which agitation of the sample and the reagent has completed and a predetermined reaction time has elapsed in the incubator disk 9, and then descends to hold the reaction container 8. Thereafter, the reaction container conveyance mechanism 12 rotationally moves to convey the reaction container 8 to the detection unit 21.

The detection unit 21 performs qualitative/quantitative analysis on a specific component contained in the sample in the conveyed reaction container 8. Note that the display of the analysis result and the control of each mechanism are performed by a control computer (not shown).

### (Configuration of Reagent Insulated Cooling Storage)

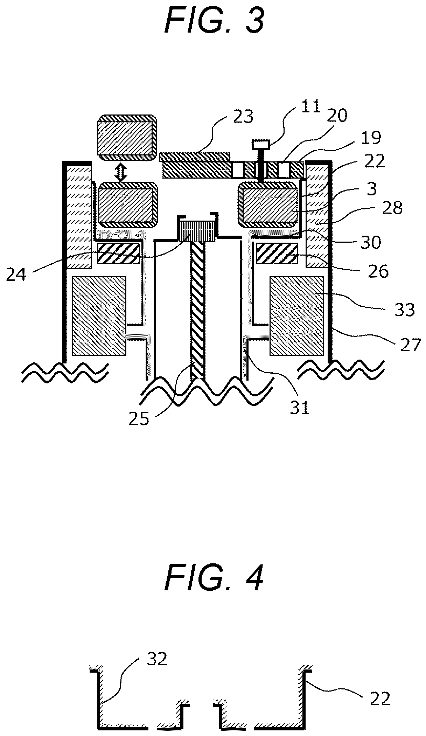

Next, the configuration of the reagent insulated cooling storage 4 will be described in detail with reference to FIGS. 2 and 3. A reagent insulated cooling storage that insulated-cools a reagent will be described below as an example, but the present embodiment can be similarly applied to a sample insulated cooling storage that for insulated-cools a sample. FIG. 2 is a top view (lid is omitted) of the reagent insulated cooling storage as viewed from above, and FIG. 3 is a cross-sectional view of the reagent insulated cooling storage as viewed from the side. The reagent insulated cooling storage 4 includes a cooling mechanism 26 and a dry air introduction mechanism 33 in addition to the reagent container loading portion 3, the lid 19, and the chamber 22 described above.

The reagent container loading portion 3 is held in the chamber 22 during operation of the automatic analyzer, and can rotate together with the chamber 22 by an operating shaft 25 via an adapter 24 at the central portion as necessary. Thus, in a case where a predetermined reagent is pipetted, the reagent container 2 containing the predetermined reagent is located under the vertical projection of the reagent aspiration hole 20 by the rotation of the reagent container loading portion 3. Note that, although not shown, a motor that rotates the operating shaft 25 is provided at the lower end of the operating shaft 25.

In addition to the reagent aspiration holes 20 described above, the lid 19 is formed with an opening portion for causing the reagent container loading portion 3 to pass through when the reagent container 2 is carried in and out, and is also provided with an opening/closing lid 23 for opening and closing the opening. When a reagent in the reagent container 2 loaded in the reagent container loading portion 3 becomes small or empty, the reagent container loading portion 3 is lifted up by a loader mechanism (not shown) and carried out of the reagent insulated cooling storage 4. Thereafter, the used reagent container 2 is extracted from the reagent container loading portion 3, and an unused reagent container 2 is loaded into the reagent container loading portion 3.

The chamber 22 is disposed to surround the periphery and the lower portion of the reagent container loading portion 3, and defines an insulated cooling space for cooling and storing the reagent container 2 together with the lid 19, the opening and closing lid 23, and the like. The insulated cooling space is cooled by the cooling mechanism 26. A housing 27 is provided outside the chamber 22 via a heat insulating material 28 for improving cooling efficiency.

The cooling mechanism 26 is disposed on a lower side of the chamber 22 to cool the chamber 22, and is desirably configured by a small device such as a Peltier element. Note that, by using a metal such as copper or aluminum having high thermal conductivity as the material of the chamber 22, the chamber 22 can be efficiently cooled by the cooling mechanism 26.

Here, since the lid 19 is provided with the reagent aspiration hole 20 through which the reagent pipetting nozzle 11 passes and the opening through which the reagent container loading portion 3 passes, it is inevitable that the outside air enters into the insulated cooling space, and moisture contained in the outside air condenses on the inner surface of the chamber 22. Thus, on the bottom surface of the chamber 22, a drainage groove 31 for discharging dew condensation water and, if necessary, an inclined surface descending toward the drainage groove 31 are formed.

Further, in the present embodiment, a hydrophilic film 32 is formed on the inner surface of the chamber 22 to facilitate the flow of generated dew condensation water toward the drainage groove 31. FIG. 4 is a cross-sectional view of the chamber as viewed from the side. In a case where the inner surface of the chamber 22 is not formed by a hydrophilic film, dew condensation water becomes water droplets and adheres to the inner surface of the chamber 22, and does not flow toward the drainage groove 31 unless the dew condensation water has a certain size (about 5 mm or more in diameter). On the other hand, in the present embodiment, by forming the hydrophilic film 32 having a contact angle with water of 15° or less on the inner surface of the chamber 22, the dew condensation water on hydrophilic film 32 is converted into a water film. The water film flows on the inner surface of the chamber 22, and as a result, 90% or more of the dew condensation water is discharged from the drainage groove 31.

However, a part of the dew condensation water is not discharged from the drainage groove 31 and remains as a water film on the inner surface of the chamber 22. Thus, in the reagent insulated cooling storage 4 of the present embodiment, not only a hydrophilic film is formed on the inner surface of the chamber 22, but also the dry air introduction mechanism 33 for introducing dry air into the chamber 22 is provided, and the water film remaining on the inner surface is quickly volatilized. As a result, it is possible to suppress generation of mold on the inner surface of the chamber 22.

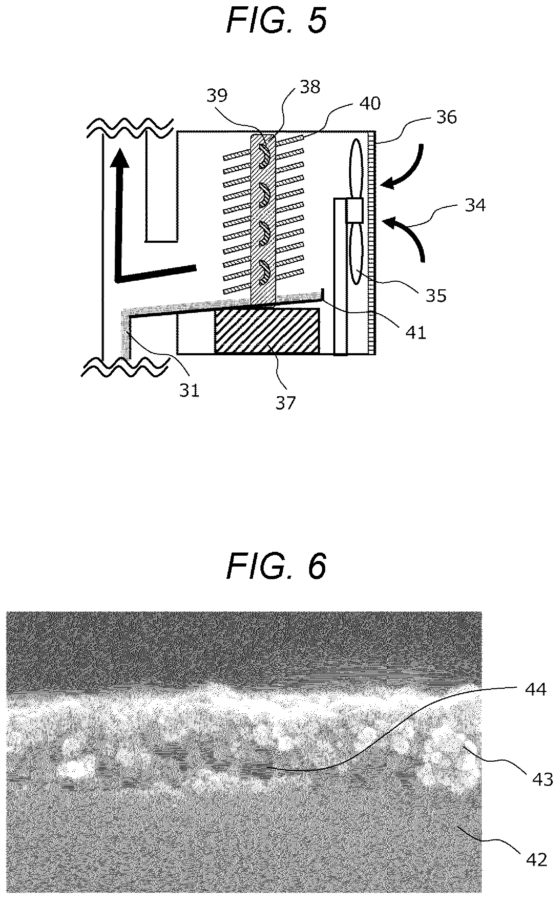

FIG. 5 is a cross-sectional view of the dry air introduction mechanism as viewed from the side. The dry air introduced into the reagent insulated cooling storage 4 (specifically, the chamber 22) by the dry air introduction mechanism 33 is intended to dry the dew condensation water in the reagent insulated cooling storage 4, and thus the absolute humidity needs to be lower than the absolute humidity of the air in the reagent insulated cooling storage 4. As shown in FIG. 5, the dry air introduction mechanism 33 mainly includes a fan 35, a filter 36, an aluminum fin 40, an aluminum fin holding portion 38, a heat exchanger 37, a pipe 39, and a gutter 41.

The fan 35 is driven (rotated) when taking the outside air 34 into the reagent insulated cooling storage 4 (dry air introduction mechanism 33), and the filter 36 removes dust such as dust in the outside air. The aluminum fin 40 comes into contact with the outside air 34 that has passed through the filter 36 to cool the outside air 34, and the aluminum fin holding portion 38 holds the aluminum fin 40.

The heat exchanger 37 supplies the cooled refrigerant into the pipe 39. Since the pipe 39 is made of aluminum and is provided to penetrate the aluminum fin holding portion 38 at a plurality of places, the aluminum fin holding portion 38 and the aluminum fin 40 are cooled by the refrigerant supplied from the heat exchanger 37. The gutter 41 is formed to be inclined so as to descend toward the drainage groove 31, and plays a role of receiving dew condensation water and guiding the dew condensation water to the drainage groove 31 in a case where the dew condensation water generated in the aluminum fin 40 flows down due to contact with the outside air 34.

A part of the dry air having passed through the dry air introduction mechanism 33 (aluminum fin 40) is discharged from the drainage groove 31 to the outside of the insulated cooling storage, and the remaining part is fed back through the drainage groove 31 into the chamber 22. Since the dry air supplied into the chamber 22 volatilizes the water film on the surface of the hydrophilic film 32, the inner surface of the chamber 22 is dried, and the generation of mold is suppressed. In addition, since the inside of the chamber 22 has a positive pressure by introduction of the dry air, the amount of entrance of outside air from the reagent aspiration hole 20 and the opening (opening/closing lid 23) is reduced, and dew condensation itself is suppressed. Note that the configuration of the dry air introduction mechanism 33 shown in FIG. 5 is merely an example, and other configurations may be adopted.

### (Hydrophilic Film)

### <Outline>

As described above, in the reagent insulated cooling storage 4 in the automatic analyzer of the present embodiment, the hydrophilic film 32 is formed on the inner surface of the chamber 22, and the contact angle of the hydrophilic film 32 with water is 15° or less. In the case of a hydrophilic film having a contact angle with water of more than 15°, dew condensation water is less likely to form a water film, and thus is less likely to be discharged from the drainage groove 31, and is likely to remain without being volatilized even though dry air is introduced. In addition, the hydrophilic film 32 formed on the inner surface of the chamber 22 desirably has not only high water resistance but also high hardness so as not to be easily damaged even though being in contact with the reagent container loading portion 3, the reagent container 2, and the like. Therefore, in the present embodiment, the hydrophilic film 32 is formed by using silicon dioxide particles and a binder.

FIG. 6 is a cross-sectional view of a hydrophilic film observed with a scanning electron microscope. According to FIG. 6, silicon dioxide particles 43 and voids 44 constituting the hydrophilic film can be confirmed on a base material 42. Note that, although not confirmed in FIG. 6, a silicon dioxide binder is also present between a plurality of silicon dioxide particles 43, on the surface of the base material 42, and the like, and the structure as a film is retained. The contact angle of silicon dioxide itself with water is about 30°, but the contact angle with water decreases by fine irregularities due to the silicon dioxide particles 43 on the surface of the hydrophilic film. In addition, due to the capillary phenomenon, dew condensation water permeates into the voids 44 inside the hydrophilic film, so that the contact angle with water further decreases. As a result, a hydrophilic film having a contact angle with water of 15° or less is realized.

Here, since the shape of the chamber 22 is complicated as shown in FIG. 4, a coating liquid for forming the hydrophilic film is desirably applied by a spray coating method, not by a method such as dip coating or spin coating. In addition, after the coating liquid is applied, a precursor of the binder contained in the coating liquid is thermally cured to form a binder, and a hydrophilic film is formed.

### <Composition of Coating Liquid for Forming Hydrophilic Film>

The coating liquid is prepared by dispersing and dissolving silicon dioxide particles and a precursor of a silicon dioxide binder in an alcoholic organic solvent. Details of individual materials and mixing ratios of the materials will be described below.

### <<Silicon Dioxide Particles>>

The average particle diameter of the silicon dioxide particles is about 5 to 50 nm. When the particle size becomes too small, the coating liquid easily floats in the air as dust during preparation of the coating liquid.

In addition, when the particle size decreases, the surface area per unit weight increases, and thus charging becomes easy. In particular, in winter, the film is likely to adhere to a wall or the like of a manufacturing site. Therefore, from the viewpoint of ease of handling, the lower limit of the particle size is set to 5 nm. In consideration of the distribution of the particle size, the lower limit of the average particle size is desirably 10 nm.

On the other hand, when the particle size increases, the coating liquid is easy to handle during the preparation of the coating liquid, but the number of voids between particles after film formation decreases, so that hydrophilicity tends to decrease. In addition, in the coating liquid prepared using the silicon dioxide particles having a particle diameter of 5 to 50 nm, the silicon dioxide particles hardly precipitate even though being stored for a long time, but in the case of using silicon dioxide particles having a particle diameter larger than this, the silicon dioxide particles precipitate at the bottom of the coating liquid when being stored for a long time. Since the density of silicon dioxide is originally about 2.5 and is larger than that of a general-purpose organic solvent having a density of about 0.7 to 1.1, silicon dioxide having a large particle diameter sinks, but silicon dioxide having a small particle diameter is inhibited from precipitating due to an interaction such as collision with solvent molecules. With this effect, precipitation is suppressed if the particle size is up to about 50 nm, and precipitation occurs when the particle size is larger than that.

In consideration of the distribution of the particle diameter, the upper limit of the average particle diameter is desirably 30 nm.

From the above description, the average particle diameter of the silicon dioxide particles used in the coating liquid is preferably set to be 5 nm or more and 50 nm or less, and more preferably 10 nm or more and 30 nm or less. Note that some of the particles may be formed by connecting several to several tens of particles having a particle size of 10 nm or more and 30 nm or less. However, such a case is also preferable because the particles are hardly precipitated in a solvent.

### <<Precursor of Silicon Dioxide Binder>>

Silicon dioxide is insoluble in organic solvents, but some precursors thereof are soluble in organic solvents. In the present embodiment, a precursor of silicon dioxide dissolved in an organic solvent is used. Specifically, a hydrolyzable silicon compound that is converted into silicon dioxide by hydrolysis is used. The most common hydrolyzable silicon compound is usually called a silica sol. In the silica sol, a plurality of tetraalkoxysilanes is partially hydrolyzed, alkoxy groups are removed, and a plurality of molecules form a silicon-oxygen-silicon bond to form a polymer having an average molecular weight of thousands to tens of thousands. The silica sol is soluble in an alcohol-based solvent such as methanol or ethanol. As the tetraalkoxysilane, tetraethoxysilane is most easily used. Since tetramethoxysilane having a shorter alkyl chain has high reactivity with water, a coating liquid for forming a hydrophilic film may be hardened when being stored in a high humidity environment for a long time. In addition, tetrapropoxysilane or tetrabutoxysilane having an alkyl chain longer than that of tetraethoxysilane is less likely to cause a hydrolysis reaction to proceed. Thus, there is a tendency that the thermal curing time after application is prolonged or the progress of the thermal curing reaction is delayed unless the heating temperature is increased. Therefore, tetraalkoxysilane for forming the silica sol is preferably tetraethoxysilane.

In addition to the silica sol, a compound having three alkoxy groups in silicon atoms having four bonding groups in the molecule and a bonding group other than the alkoxy groups such as a benzene ring and an alkyl chain can also be used as the precursor of the silicon dioxide binder. However, in the case using this material, the hydrophilic film contains not only silicon dioxide but also atoms such as carbon, nitrogen, and sulfur.

Specific examples of the compound include methyltrimethoxysilane, dimethyldimethoxysilane, phenyltrimethoxysilane, phenyltriethoxysilane, methyltriethoxysilane, n-propyltrimethoxysilane, n-propyltriethoxysilane, vinyltrimethoxysilane, vinyltriethoxysilane, 3-aminopropyltrimethoxysilane, 3-aminopropyltriethoxysilane, N-2-(aminoethyl)-3-aminopropyltrimethoxysilane, N-2-(aminoethyl)-3-aminopropyltriethoxysilane, 3-isocyanatopropyltrimethoxysilane, 3-isocyanatopropyltriethoxysilane, 3-mercaptopropyltrimethoxysilane, and 3-mercaptopropyltriethoxysilane.

### <<Organic Solvent>>

As the solvent of the coating liquid, it is preferable to use a solvent in which a precursor of the silicon dioxide binder can be dissolved. In this respect, methanol, ethanol, 1-propanol, 2-propanol, 1-butanol, 2-butanol, and the like are preferable. Pentanol, hexanol, octanol, and the like having a longer hydrocarbon chain are difficult to dissolve the precursor of the silicon dioxide binder, and in some cases, are partially separated. In addition, when the hydrocarbon chain is long, the boiling point is also high, and thus liquid sagging or the like may occur after coating. Thus, the number of carbon atoms of the alcohol is desirably 4 or less, that is, the upper limit is desirably butanol. In addition, the precursor of the silicon dioxide binder is easily dissolved in diols such as ethylene glycol and diethylene glycol. However, diol has a higher boiling point than alcohols such as ethanol and butanol, and it takes time to dry the diol after application, and thus the diol is not a practical solvent.

### <<Mixing Ratio>>

The hydrophilic film is formed by the solid content in the coating liquid, that is, the silicon dioxide particles and the precursor of the silicon dioxide binder. Here, in a case where the coating liquid is applied to the inner surface of the chamber 22 by spray coating, when the solid content ratio in the coating liquid is high, the nozzle is likely to be clogged. Even though the coating liquid is not clogged, the solid content may be deposited in the vicinity of the nozzle to change the direction of the spray. Therefore, it is desirable that the concentration of the solid content in the coating liquid is set to 1% by weight at the maximum, and a coating liquid having a higher concentration than this is not used. In other words, the proportion of the organic solvent in the coating liquid for forming the hydrophilic film is preferably set to be 99 wt% or more.

The contact angle of the hydrophilic film with water may vary depending on the mixing ratio of the two materials, silicon dioxide particles and the precursor of the silicon dioxide binder. This is because the hydrophilic source is silicon dioxide particles, and the contact angle with water tends to decrease as the proportion of silicon dioxide particles increases.

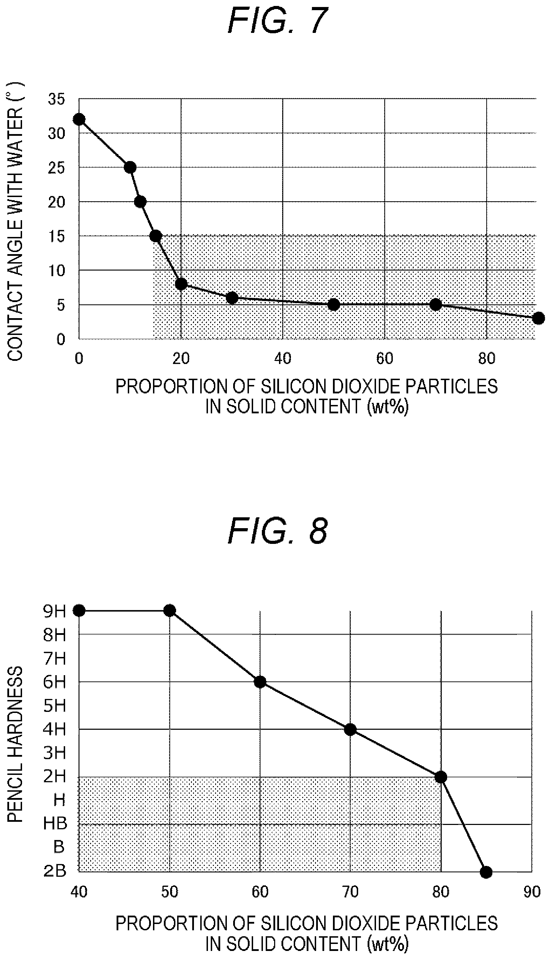

FIG. 7 is a graph showing a relationship between the proportion of silicon dioxide particles in the hydrophilic film (solid content of the coating liquid) and the contact angle with water. FIG. 7 shows an example of a case where the particle size of the silicon dioxide particles is 10 nm, the thermal curing time after spray coating with the coating liquid is 1 hour, the thermal curing temperature is 180°C, and the film thickness of the hydrophilic film is 100 nm.

As shown in FIG. 7, if the proportion of the silicon dioxide particles in the solid content of the coating liquid was 20 wt% or more, the contact angle of the hydrophilic film formed with water was less than 10°. When the proportion of the silicon dioxide particles was smaller than this, the contact angle of the hydrophilic film with water was larger than 10°. Specifically, in a case where the proportion of the silicon dioxide particles was 15 wt%, the contact angle of the hydrophilic film with water increased to about 15°. Similarly, in a case where the proportion of the silicon dioxide particles was 12 wt%, the contact angle of the hydrophilic film with water increased to about 20°. Furthermore, in a case where the proportion of silicon dioxide particles was zero, the contact angle with water was about 32°.

FIG. 8 is a graph showing a relationship between the proportion of silicon dioxide in the hydrophilic film (solid content of the coating liquid) and pencil hardness. Similarly to FIG. 7, FIG. 8 shows an example of a case where the particle size of the silicon dioxide particles is 10 nm, the thermal curing time after spray coating with the coating liquid is 1 hour, the thermal curing temperature is 180°C, and the film thickness of the hydrophilic film is 100 nm.

As shown in FIG. 8, when the proportion of the silicon dioxide particles increased, that is, when the proportion of the precursor of the silicon dioxide binder decreased, the physical strength of the hydrophilic film decreased. In a case where the proportion of the silicon dioxide particles was 80 wt%, the pencil hardness of the hydrophilic film was about 2 H. It is considered that there is no problem in practical use as long as the hardness is such a degree. However, in a case where the proportion of the silicon dioxide particles was 85 wt%, the pencil hardness of the hydrophilic film decreased to about 2B. Assuming that the material of the reagent container 2 and the like is an acrylic resin or a polyethylene terephthalate-based resin, the pencil hardness of these resins is about 2B to H, and thus the hydrophilic film may be damaged in a case where the reagent container 2 and the like accidentally fall onto the hydrophilic film. As a result, in the solid content in the coating liquid that forms the hydrophilic film, the proportion of the silicon dioxide particles is preferably 80 wt% or less, in other words, the proportion of the precursor of the silicon dioxide binder is preferably 20 wt% or more.

In consideration of both the contact angle with water and the pencil hardness described above, the proportion of the silicon dioxide particles in the solid content in the coating liquid that forms the hydrophilic film is preferably 15 wt% or more and 80 wt% or less, and more preferably 20 wt% or more and 80 wt% or less.

### <Film Forming Method>

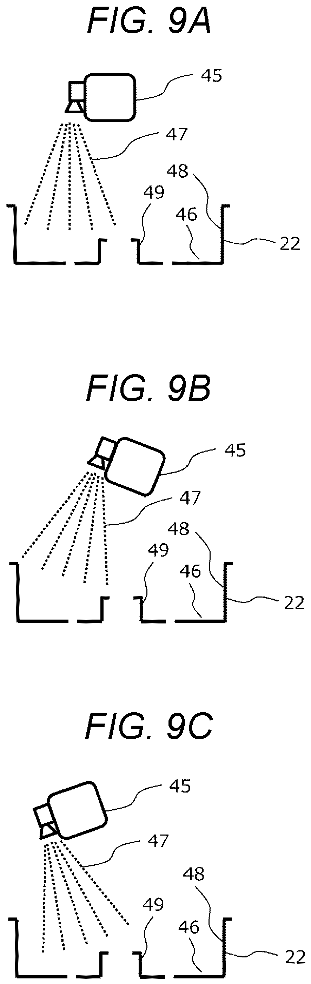

As described above, in a case where the coating liquid is applied to the inner surface of the chamber 22 having a complicated shape, it is preferable to use spray coating. Here, a method of applying the coating liquid to the inner surface of the chamber 22 by spray coating will be specifically described with reference to FIGS. 9A to 9C.

In a case where the coating liquid is applied to the bottom surface 46 of the chamber 22, as shown in FIG. 9A, a spray gun 45 discharges droplets 47 of the coating liquid from directly above the bottom surface of the chamber 22. Then, in a case where the coating liquid is applied to the outer peripheral side surface 48 of the chamber 22, as shown in FIG. 9B, the spray gun 45 discharges the droplets 47 of the coating liquid in a state of being slightly inclined toward the outer peripheral side. Further, in a case where the coating liquid is applied to the inner peripheral side surface 49 of the chamber 22, as shown in FIG. 9C, the spray gun 45 discharges the droplets 47 of the coating liquid in a state of being slightly inclined toward the inner peripheral side.

In any of FIGS. 9A to 9C, while the spray gun 45 applies the droplets 47 of the coating liquid to one side with respect to the axis of the chamber 22, the chamber 22 is rotated on a table (not shown), so that the coating liquid can be applied to the entire inner surface of the chamber 22 with a uniform thickness. When the size of the droplet 47 is small, it is easy to uniformly control the film thickness, but the time required for coating is long. Therefore, when the size is too small, the throughput at the time of mass production tends to decrease. In addition, it is necessary to reduce the nozzle diameter of the spray gun 45 in order to reduce the size of the droplet 47, and in this case, the solid content in the coating liquid is likely to clog the nozzle tip or the vicinity thereof. As a result, the size of the droplet 47 is preferably about 10 to 100 µm, and more preferably 10 to 50 nm.

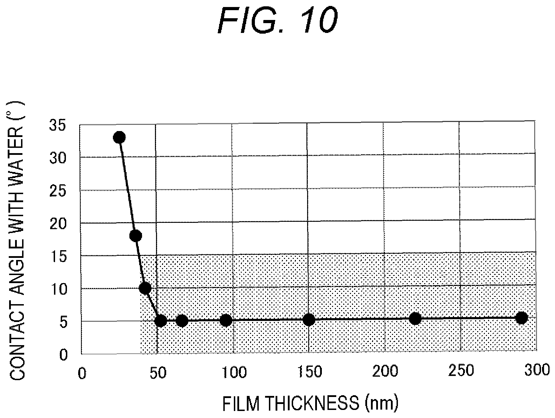

Next, the results of examining the thickness of the hydrophilic film for obtaining sufficient hydrophilicity will be described. FIG. 10 is a graph showing a relationship between the thickness of the hydrophilic film and the contact angle with water. Note that FIG. 10 shows an example of a case where the particle size of the silicon dioxide particles is 10 nm, the proportion of the silicon dioxide particles in the solid content in the coating liquid that forms a hydrophilic film is 50 wt%, the thermal curing time after spray coating with the coating liquid is 1 hour, and the thermal curing temperature is 180°C.

As shown in FIG. 10, in a case where the film thickness of the hydrophilic film was 50 nm or more, the contact angle with water was about 5°. In addition, it has been understood that a film thickness of 40 nm or more is required in order to obtain a hydrophilic film having a contact angle with water of 15° or less. The lower the contact angle with water, the thinner the dew condensation water becomes, so that the contact angle with water is preferably 5° rather than 15°. That is, the film thickness of the hydrophilic film is preferably set to be 50 nm or more. Note that the reason why the contact angle increases when the hydrophilic film is thin is presumed to be that voids between particles become shallow, and the capillary phenomenon becomes weak.

Actually, when the coating liquid was applied to the chamber 22 with the spray gun to form the hydrophilic film, the film thickness variation occurred by about ±30 to 50%. This is considered to be because the shape of the chamber 22 is complicated. That is, even though an average film thickness of 50 nm is targeted, the average film thickness may be about 25 nm at a thin portion. Therefore, in consideration of film thickness variation, the target average film thickness of the hydrophilic film is preferably set to be 100 nm or more.

Examples and comparative examples will be described below.

### Example 1

### (Preparation of Coating Liquid)

First, silicon dioxide particles (15 g) having an average particle size of 10 nm, diethylene glycol monoacetate (0.5 g), and ethanol (84.5 g) are put in a polypropylene bottle having a content of 200 ml, and are agitated with an overhead stirrer to prepare 100 g of a dispersion A of 15 wt% silicon dioxide particles. Then, 750 g of a silica sol solution B prepared such that the solid content concentration after hydrolysis is 2% by weight is prepared. Thereafter, the dispersion A (1 g), the silica sol solution B (7.5 g), and Solmix AP-7 (291.5 g), which is industrial ethanol manufactured by Japan Alcohol Sales Co., Ltd., were added to a polypropylene bottle having a content volume of 1000 ml, and the bottle was hermetically sealed and then agitated several times to prepare a coating liquid (hydrophilic coating liquid C) (300 g) that forms a hydrophilic film that has a solid content of 0.1 wt% and has silicon dioxide particles of 50 wt% in the solid content. Note that the hydrophilic film formed using the hydrophilic coating liquid C prepared in this example had a contact angle with water of 5°.

### (Film Forming Process of Forming Hydrophilic Film on Chamber)

In the chamber used in this example, the diameter is 61 cm, the height of the outer peripheral side surface is 14 cm, and there is a raised portion having a diameter of 14 cm and a height of 9 cm on the inner peripheral side (central portion), so that the total area of the inner surface is about 6000 cm2. The hydrophilic film is made of silicon dioxide having a density of about 2.5 g/cm3, but since the hydrophilic film has voids inside, it is actually estimated to be about 1.5 g/cm3. In order to form a film having an average film thickness of 100 nm, assuming that the density of the film is 1.5, the solid content of the film is 0.09 g, and the weight of the hydrophilic coating liquid C having such a solid content is 90 g. At the time of spray coating, since the hydrophilic coating liquid C is scattered in a region other than the chamber, it is assumed that the utilization efficiency of the hydrophilic coating liquid C is about 50%. As a result, in order to form a hydrophilic film having an average film thickness of 100 nm on the inner surface of the chamber, about 180 g of the hydrophilic coating liquid C is required.

Therefore, in the present example, 250 g of the hydrophilic coating liquid C was put in a paint filling container of the spray gun in consideration of a margin. Thereafter, as shown in FIGS. 9A to 9C, the hydrophilic coating liquid C was applied to the chamber. After the application, the chamber is put into a thermostatic bath at 180°C and heated for 1 hour.

After heating, the chamber is extracted from the thermostatic bath and left until the surface reaches the temperature of human skin. In this manner, a chamber having a hydrophilic film on the inner surface was formed.

### (Verification in Insulated Cooling Storage (Automatic Analyzer) Incorporating Chamber)

The chamber in which the hydrophilic film was formed in the above-described manner was attached to a reagent insulated cooling storage of an automatic immunity analyzer e-801 manufactured by Hitachi High-Technologies Corporation. Then, the inside of the reagent insulated cooling storage was cooled until the temperature in the reagent container reached 5°C, and then a reagent container loading portion was installed in the chamber, and the reagent container was inserted into the reagent container loading portion.

Thereafter, the automatic analyzer was operated, the reagent aspirated from each reagent container was discharged to a reaction container containing the sample, and a specific component contained in the sample was qualitatively/quantitatively analyzed by a color reaction, a luminescence reaction, or the like. Note that, during the operation of the automatic analyzer, dry air was constantly introduced into the reagent insulated cooling storage by the dry air introduction mechanism shown in FIG. 5, and the inside of the reagent insulated cooling storage was set to a positive pressure of about 0.001 atm from the outside. Then, the automatic analyzer was continuously operated for two weeks while the inside of the reagent insulated cooling storage was maintained at 5°C. Then, the inner surface of the chamber was observed. Then, the inner surface of the chamber was almost dried, and the generation of mold was not confirmed.

On the other hand, a chamber in which a hydrophilic film was not formed was also attached to the reagent insulated cooling storage of the automatic immunity analyzer e-801 manufactured by Hitachi High-Technologies Corporation, and was continuously operated for 2 weeks under the same conditions as described above. Then, the inner surface of the chamber was observed. Then, the inner surface of the chamber was wet with water droplets due to dew condensation, and generation of mold was partially confirmed.

As described above, it has become clear that, by forming a hydrophilic film having a contact angle with water of 5° on the inner surface of the chamber, the generation of mold can be suppressed even though the automatic analyzer is operated for a relatively long time.

### Example 2

In Example 2, unlike Example 1, at the time of preparing a coating liquid, the dispersion A (0.4 g), the silica sol solution B (7.5 g), and Solmix AP-7 (287.6 g), which is industrial ethanol manufactured by Japan Alcohol Sales Co., Ltd., were added to a polypropylene bottle having a content volume of 1000 ml, and the bottle was hermetically sealed and then agitated several times to prepare a coating liquid (hydrophilic coating liquid D) (300 g) that forms a hydrophilic film that has a solid content of 0.1 wt% and has silicon dioxide particles of 20 wt% in the solid content. Note that the hydrophilic film formed using the hydrophilic coating liquid D prepared in Example 2 had a contact angle with water of 8°. The other conditions are the same as those in Example 1.

The chamber in which the hydrophilic film was formed was attached to the reagent insulated cooling storage, and the automatic analyzer was continuously operated for two weeks. Then, when the inside of the reagent insulated cooling storage was observed, the inner surface of the chamber was almost dried, and the generation of mold was not confirmed.

As described above, it has become clear that, by forming a hydrophilic film having a contact angle with water of 8° on the inner surface of the chamber, the generation of mold can be suppressed even though the automatic analyzer is operated for a relatively long time.

### Example 3

In Example 3, unlike Example 1 and Example 2, at the time of preparing a coating liquid, the dispersion A (0.4 g), the silica sol solution B (17 g), and Solmix AP-7 (382.6 g), which is industrial ethanol manufactured by Japan Alcohol Sales Co., Ltd., were added to a polypropylene bottle having a content volume of 1000 ml, and the bottle was hermetically sealed and then agitated several times to prepare a coating liquid (hydrophilic coating liquid E) (400 g) that forms a hydrophilic film that has a solid content of 0.1 wt% and has silicon dioxide particles of 15 wt% in the solid content. Note that the hydrophilic film formed using the hydrophilic coating liquid E prepared in Example 3 had a contact angle with water of 15°. The other conditions are the same as those in Example 1 and Example 2.

The chamber in which the hydrophilic film was formed was attached to the reagent insulated cooling storage, and the automatic analyzer was continuously operated for two weeks. Then, when the inside of the reagent insulated cooling storage was observed, the inner surface of the chamber was almost dried, and the generation of mold was not confirmed.

As described above, it has become clear that, by forming a hydrophilic film having a contact angle with water of 15° on the inner surface of the chamber, the generation of mold can be suppressed even though the automatic analyzer is operated for a relatively long time.

### (Comparative Example 1)

In Comparative Example 1, unlike Examples, at the time of preparing a coating liquid, the dispersion A (0.2 g), the silica sol solution B (11 g), and Solmix AP-7 (238.8 g), which is industrial ethanol manufactured by Japan Alcohol Sales Co., Ltd., were added to a polypropylene bottle having a content volume of 1000 ml, and the bottle was hermetically sealed and then agitated several times to prepare a coating liquid (hydrophilic coating liquid F) (250 g) that forms a hydrophilic film that has a solid content of 0.1 wt% and has silicon dioxide particles of 12 wt% in the solid content. Note that the hydrophilic film formed using the hydrophilic coating liquid F prepared in Comparative Example 1 had a contact angle with water of 20°.

The other conditions are the same as those in Examples.

The chamber in which the hydrophilic film was formed was attached to the reagent insulated cooling storage, and the automatic analyzer was continuously operated for two weeks. Then, when the inside of the reagent insulated cooling storage was observed, the generation of mold was not confirmed, but a water film was adhering to some places.

As described above, it has been understood that, in a case where the contact angle of the hydrophilic film formed on the inner surface of the chamber with water is 20°, the dew condensation water cannot be completely removed. In addition, when the automatic analyzer was continuously operated for another four weeks, black mold started to be generated on a part of the water film adhering to some places.

In consideration of Examples and Comparative Example 1, it can be determined that there is a possibility that generation of mold due to dew condensation water cannot be suppressed in a case where the contact angle of the hydrophilic film formed on the inner surface of the chamber with water exceeds 15°. This is considered to be because when the contact angle with water increases, the water film becomes thick, and the amount of dew condensation water adhering to the inner surface of the chamber increases. Therefore, in order to reliably discharge the dew condensation water generated on the inner surface of the refrigerator, it is important to form a hydrophilic film having a contact angle with water of 15° or less on the inner surface of the chamber of the insulated cooling storage.

### (Comparative Example 2)

In Comparative Example 2, unlike Examples, the dry air introduction mechanism was stopped so that dry air was not introduced into the reagent insulated cooling storage. The other conditions are the same as those in Example 1.

When the automatic analyzer was continuously operated for two weeks, and then the inside of the reagent insulated cooling storage was observed, the generation of mold was not confirmed on the inner surface of the chamber, and a part far from the drainage groove was dry, but a part close to the drainage groove was covered with a water film. Note that, when the amount of water flowing out from the drainage groove was examined, it has been understood that most of the dew condensation water was discharged from the drainage groove.

As described above, it has been understood that, in a case where dry air is not introduced into the insulated cooling storage, dew condensation water remains as a slight water film on the inner surface of the refrigerator, and the dew condensation water cannot be completely removed. Further, when the automatic analyzer was continuously operated for another four weeks, black mold started to be generated in a part of the water film adhering to a portion close to the drainage groove.

In consideration of Examples and Comparative Example 2, it is important to introduce dry air into the inner surface of the insulated cooling storage in order to reliably volatilize dew condensation water generated on the inner surface of the insulated cooling storage.

### (Comparative Example 3)

In Comparative Example 3, unlike Examples, only the function of drying the outside air in the dry air introduction mechanism was stopped, and the normal outside air was introduced into the reagent insulated cooling storage instead of the dry air. The other conditions are the same as those in Example 1.

When the automatic analyzer was continuously operated for two weeks, and then the inside of the reagent insulated cooling storage was observed, the generation of mold was not confirmed on the inner surface of the chamber, but a part close to the drainage groove was covered with a water film. The area covered with the water film was larger than that in the comparative example. Note that, when the amount of water flowing out from the drainage groove was examined, it has been understood that most of the dew condensation water was discharged from the drainage groove.

As described above, it has been understood that, in a case where the air introduced into the insulated cooling storage is not dried, the dew condensation water remains as a water film on the inner surface of the refrigerator, and the dew condensation water cannot be completely removed. Further, when the automatic analyzer was continuously operated for another two weeks, black mold started to be generated in a part of the water film adhering to a portion close to the drainage groove.

In consideration of Examples and Comparative Example 3, it is important to introduce not the outside air but the dry air into the inner surface of the insulated cooling storage in order to reliably volatilize dew condensation water generated on the inner surface of the insulated cooling storage.

### Reference Signs List

- 1: automatic analyzer
- 2: reagent container
- 3: reagent container loading portion
- 4: reagent insulated cooling storage
- 5: sample container
- 6: rack
- 7: rack conveyance line
- 8: reaction container
- 9: incubator disk
- 10: sample pipetting nozzle
- 11: reagent pipetting nozzle
- 12: reaction container conveyance mechanism
- 13: sample pipetting position
- 14: sample pipetting tip/reaction container conveyance mechanism
- 15: sample pipetting tip/reaction container holding portion
- 16: reaction container agitation mechanism
- 17: sample pipetting tip/reaction container disposal port
- 18: sample pipetting tip attachment position
- 19: lid
- 20: reagent aspiration hole
- 21: detection unit
- 22: chamber
- 23: opening and closing lid
- 24: adaptor
- 25: operating shaft
- 26: cooling mechanism
- 27: housing
- 28: heat insulating material
- 30: dew condensation water
- 31: drainage groove
- 32: hydrophilic film
- 33: dry air introduction mechanism
- 34: outside air
- 35: fan
- 36: filter
- 37: heat exchanger
- 38: aluminum fin holding portion
- 39: pipe
- 40: aluminum fin
- 41: gutter
- 42: base material
- 43: silicon dioxide particle
- 44: void
- 45: spray gun
- 46: bottom surface
- 47: droplet
- 48: outer peripheral side surface
- 49: inner peripheral side surface

## Claims

1. An automatic analyzer including an insulated cooling storage that insulated-cools a container containing a reagent or a specimen, the automatic analyzer comprising
a dry air introduction mechanism that introduces air having an absolute humidity lower than an absolute humidity of air in the insulated cooling storage into an inner surface of the insulated cooling storage,
wherein a hydrophilic film having a contact angle with water of 15° or less is formed on the inner surface of the insulated cooling storage.

2. The automatic analyzer according to claim 1, wherein the hydrophilic film contains silicon dioxide.

3. The automatic analyzer according to claim 2, wherein a proportion of silicon dioxide in the hydrophilic film is 20 wt% or more and 80 wt% or less.

4. The automatic analyzer according to claim 2, wherein voids are provided between particles of silicon dioxide in the hydrophilic film.

5. The automatic analyzer according to claim 4, wherein an average particle diameter of silicon dioxide in the hydrophilic film is 10 nm or more and 30 nm or less.

6. The automatic analyzer according to claim 1, wherein an average film thickness of the hydrophilic film is 100 nm or more.

7. An insulated cooling storage that insulated-cools a storage target, the insulated cooling storage comprising
a dry air introduction mechanism that introduces air having an absolute humidity lower than an absolute humidity of air in the insulated cooling storage into an inner surface of the insulated cooling storage,
wherein a hydrophilic film having a contact angle with water of 15° or less is formed on the inner surface of the insulated cooling storage.
